(19) Europäisches Patentamt
European Patent Office
Office européen des brevets

(11) EP 2 682 787 A1

(12) EUROPEAN PATENT APPLICATION

(43) Date of publication:
08.01.2014 Bulletin 2014/02

(51) Int Cl.:
G01V 3/20 (2006.01)          G01V 3/30 (2006.01)

(21) Application number: 12174680.4

(22) Date of filing: 02.07.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(72) Inventors:
• Kherroubi, Josselin
  92142 Paris (FR)
• Legendre, Fabienne
  92142 Paris (FR)
• Ollivier, Faivre
  92142 Paris (FR)
• Mosse, Laurent
  22640-101 Rio de Janeiro (BR)

(74) Representative: Fortt, Simon Merton et al
Schlumberger Cambridge Research Ltd
IPL
High Cross, Madingley Road
Cambridge, Cambridgeshire CB3 0EL (GB)

(71) Applicants:
• Services Pétroliers Schlumberger
  75007 Paris (FR)
  Designated Contracting States:
  FR
• SCHLUMBERGER TECHNOLOGY B.V.
  2514 JG  The Hague (NL)
  Designated Contracting States:
  AL BG CZ DE DK GR HU IE IT LT NO PL RO SI SK
  TR
• Schlumberger Holdings Limited
  Tortola 1110 (VG)
  Designated Contracting States:
  GB NL
• PRAD Research and Development Limited
  Road Town, Tortola 1110 (VG)
  Designated Contracting States:
  AT BE CH CY EE ES FI HR IS LI LU LV MC MK MT
  PT RS SE SM

(54) **Methods and Systems for Improving Interpretation of Formation Evaluation Measurements**

(57)    The disclosure provides methods and systems for improving the interpretation of formation evaluation measurements. The methods involve using a downhole tool to measure a property of a formation at multiple depths of investigation and calculating a spatial integrated J function, a spatial integrated K function, or both from the measurements. The J function and K function are used in different applications to improve interpretation. The system includes a tool for measuring a formation property and a processor for calculating a spatial integrated J function, a spatial integrated K function from the measurements taken at different depths of investigation. The processor may also perform interpretations such as classifications, probability distributions and initialization steps for radial inversion using the J and K functions.

FIG. 1

EP 2 682 787 A1

**Description**

FIELD

The present disclosure relates to drilling wellbores in subterranean formations. The present disclosure also relates to systems and methods for improving the interpretation of formation evaluation measurements.

BACKGROUND

Oil prices continue to rise in part because the demand for oil continues to grow, while stable sources of oil are becoming scarcer. Oil companies continue to develop new tools for generating data from boreholes with the hope of leveraging such data by converting it into meaningful information that may lead to improved production, reduced costs, and/or streamlined operations.

Logging tools are a major component of the wireline business and an increasing part of the logging while drilling business. While the logging tools provide measurements containing abundant indirect data about the subsurface, it remains a challenge to extract the geological and petrophysical knowledge contained therein, especially in a cost-effective and time-efficient manner. For example, radial inversion can be used to generate a model of the formation invasion profile. However, radial processing can be very time-intensive and cumbersome, especially when large data sets are involved due to the complex mathematical requirements. Radial processing also faces robustness problems. For example, in the case of noisy measurements, or if the inversion may admit multiple solutions, the inversion procedure may provide unstable and poor results.

SUMMARY

The present disclosure relates to methods and systems for analyzing raw data from borehole logging tools. In some embodiments, the methods relate to analyzing data generated by logging tools which take measurements of a subterranean formations at different depths of investigation using a spatial integrated J function ("simplified J function"), a spatial integrated K function ("simplified K function"), or both. In some embodiments, the systems include a downhole tool for measuring a property of a subterranean formation at different depths of investigation and a processor for computing a spatial integrated J function, a spatial integrated K function, or both for the measurements.

In some embodiments the methods comprise using a logging tool to acquire data relating to a formation property at different depths of investigation, calculating a spatial integrated J function, a spatial integrated K function, or both for the property at each depth of investigation to generate a set of calculated J functions, a set of calculated K functions, and using at least a subset of the calculated J functions, a subset of the set of calculated K functions, or both to evaluate classification information relating to at least one of invasion radius profile, conductivity contrast, and permittivity contrast. In further embodiments, evaluating classification information comprises ordering the set of calculated K functions, ordering the set of calculated J functions, or both and analyzing the ordering for information relating to classification. In some embodiments, the depths of investigation are radial depths of investigation. In some embodiments, the depths of investigation are vertical depths of investigation.

In some embodiments, the methods comprise using a logging tool to acquire data relating to a formation property at different depths of investigation; calculating a spatial integrated J function, a spatial integrated K function, or both for the property at each depth of investigation to generate a set of calculated J functions, a set of calculated K functions, or both; calculating a set of estimated formation parameters for a given depth of investigation from the corresponding J function, the corresponding K function or both for each predetermined invasion radius in a set of predetermined invasion radii; and, calculating a cost corresponding to each set of estimated formation parameters at the given depth of investigation generating a set of calculated costs corresponding to the set of predetermined invasion radii at the given depth of investigation. In further embodiments, the methods comprise identifying a lowest cost among the set of calculated costs and performing an initial radial inversion for each predetermined invasion radius associated with the lowest cost. In addition or in the alternative, in other embodiments, the methods further comprise calculating a probability distribution for the set of predetermined invasion radii, a probability for each of one or more predetermined invasion radii in the set of predetermined radii, or both. In yet further embodiments, the methods comprise evaluating the probability distribution to determine at least one of: an estimated invasion radius, existence of multiple possible invasion radii, existence of a homogenous zone, and existence of a ramp zone. In some embodiments, the set of estimated formation parameters includes a first permittivity associated with a first zone, a first conductivity associated with the first zone, a second conductivity associated with a second zone, and a second permittivity associated with the second zone.

In some embodiments, the methods comprise using a logging tool to acquire data relating to a formation property at different depths of investigation; calculating a spatial integrated J function, a spatial integrated K function, or both for the property at each depth of investigation to generate a set of calculated J functions, a set of calculated K functions, or both; using at least a subset of the calculated J functions, a subset of the set of calculated K functions, or both to evaluate classification information relating to at least one of invasion radius profile, conductivity contrast, and permittivity contrast; calculating a set of estimated formation parameters for a given depth of investigation from the corresponding spatial integrated J function, the corresponding spatial integrated K function or both for each predetermined invasion radius in a set of predetermined invasion radii; calculating a cost corresponding to each set of estimated formation parameters at the given depth of investigation generating a set of calculated costs corresponding to the set of predetermined invasion radii at the given depth of investigation; identifying the lowest cost and using each predetermined invasion radius associated with the lowest cost as an initial guess for a radial inversion.

In some embodiments, the systems comprise a downhole tool for measuring a property of a formation at different depths of investigation and a processor for computing a spatial integrated J function, a spatial integrated K function, or both for the measured property at each depth of investigation. In some embodiments, the processor further: evaluates classification information, calculates an initial guess from the data and the spatial integrated K and J functions for a radial inversion, calculates an invasion radius probability distribution, and/or calculates a probability for each of a predetermined radius of invasion in a set of predetermined radius of inversion. In some embodiments, the downhole tool measures a property such as resistivity, conductivity, and/or a dielectric property of the formation. In some embodiments the downhole tool is tool, such as a dielectric tool, for example Schlumberger's Dielectric Scanner™, which measures variation of formation dielectric properties as a function of frequency.

The identified embodiments are exemplary only and are therefore non-limiting. The details of one or more non-limiting embodiments of the invention are set forth in the accompanying drawings and the descriptions below. Other embodiments of the invention should be apparent to those of ordinary skill in the art after consideration of the present disclosure.

BRIEF DESCRIPTION OF DRAWINGS

Figure 1 is a partial schematic representation of an exemplary apparatus for logging while drilling that is compatible with the systems and methods of this disclosure.

Figure 2 is a partial schematic representation of another exemplary apparatus that is compatible with the systems and methods of this disclosure.

Figure 3 is a schematic representation of a logging model composed of concentric radial layers in profile view and cross-sectional view.

Figure 4 is a graphical representation of the J and K functions calculated from sample downhole data acquired at two different orientations and a single frequency by a Dielectric Scanner™ or dielectric tool, according to an embodiment of this disclosure.

Figure 5 is a graphical representation of classification analysis based on J and K functions calculated from sample downhole data acquired at two different orientations and each of two different frequencies by a Dielectric Scanner™, according to an embodiment of this disclosure.

Figure 6 is a flow chart representing an inversion problem.

Figure 7 is a graphical representation of a radial quick-look for formation conductivity property according to an embodiment of this disclosure.

DETAILED DESCRIPTION

Unless defined otherwise, all technical and scientific terms used herein have the same meaning as is commonly understood by one of ordinary skill in the art to which this disclosure belongs. In the event that there is a plurality of definitions for a term herein, those in this section prevail unless stated otherwise.

Where ever the phrases "for example," "such as," "including" and the like are used herein, the phrase "and without limitation" is understood to follow unless explicitly stated otherwise. Therefore, "for example a mud turbine generator" means "for example and without limitation a mud turbine generator."

The terms "comprising" and "including" and "involving" (and similarly "comprises" and "includes" and "involves") are used interchangeably and mean comprising. Specifically, each of the terms is defined consistent with the common United States patent law definition of "comprising" and is therefore interpreted to be an open term meaning "at least the following" and also interpreted not to exclude additional features, limitations, aspects, etc.

The term "about" is meant to account for variations due to experimental error. The term "substantially" is meant to permit deviations from a descriptor that does not negatively impact the intended purpose. All measurements or numbers are implicitly understood to be modified by the word about, even if the measurement or number is not explicitly modified by the word about. Similarly, descriptive terms are implicitly understood to be modified by the word substantially, even if the term is not explicitly modified by the word substantially.

The terms "wellbore" and "borehole" are used interchangeably.

"Measurement While Drilling" ("MWD") can refer to devices for measuring downhole conditions including the movement and location of the drilling assembly contemporaneously with the drilling of the well. "Logging While Drilling" ("LWD") can refer to devices concentrating more on the measurement of formation parameters. While distinctions may exist between these terms, they are also often used interchangeably. For purposes of this disclosure MWD and LWD are used interchangeably and have the same meaning. That is, both terms are understood as related to the collection of downhole information generally, to include, for example, both the collection of information relating to the movement and position of the drilling assembly and the collection of formation parameters.

Whenever the phrase "derived from" or "calculated from" or the like are used, "directly or indirectly" are understood to follow. Also, the phrases "estimating from the data" or "calculating from the data" or the like are understood to mean "from the data or subset of the data."

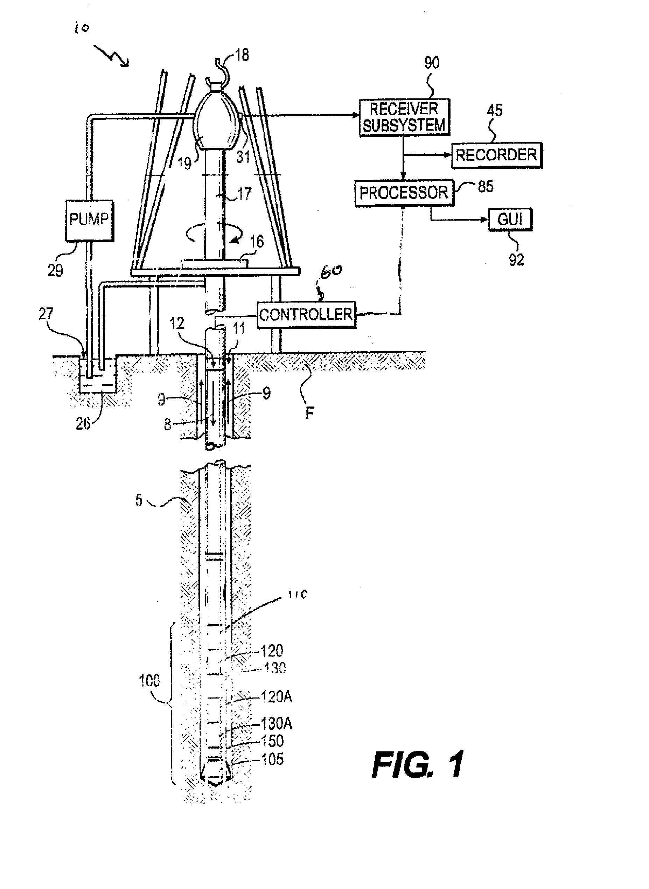

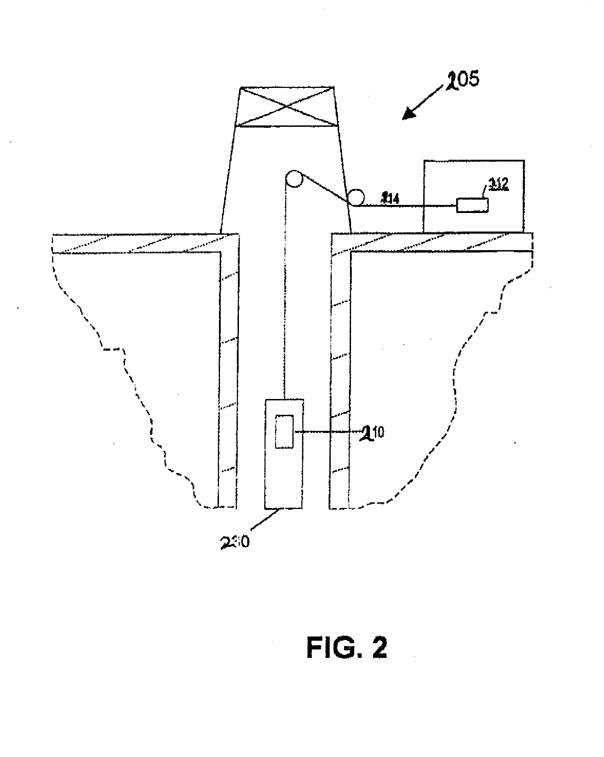

FIGS. 1 and 2 illustrate non-limiting, exemplary well logging systems used to obtain well logging data and other information, which may be used with systems and methods in accordance with embodiments of the present disclosure.

FIG. 1 illustrates a land-based platform and derrick assembly (drilling rig) **10** and drill string **12** with a well logging data acquisition and logging system, positioned over a wellbore **11** for exploring a formation **F.** In the illustrated embodiment, the wellbore **11** is formed by rotary drilling in a manner that is known in the art. Those of ordinary skill in the art given the benefit of this disclosure will appreciate, however, that the subject matter of this disclosure also finds application in directional drilling applications as well as rotary drilling, and is not limited to land-based rigs. In addition, although a logging while drilling apparatus is illustrated, the subject matter of this disclosure is also applicable to wireline drilling (for example as shown in FIG. 2).

A drill string **12** is suspended within the wellbore **11** and includes a drill bit **105** at its lower end. The drill string **12** is rotated by a rotary table **16,** energized by means not shown, which engages a kelly **17** at the upper end of the drill string. The drill string **12** is suspended from a hook **18,** attached to a travelling block (also not shown), through the kelly **17** and a rotary swivel **19** which permits rotation of the drill string **12** relative to the hook **18.**

Drilling fluid or mud **26** is stored in a pit **27** formed at the well site. A pump **29** delivers the drilling fluid **26** to the interior of the drill string **12** via a port in the swivel **19,** inducing the drilling fluid to flow downwardly through the drill string **12** as indicated by the directional arrow **8.** The drilling fluid exits the drill string **12** via ports in the drill bit **105,** and then circulates upwardly through the region between the outside of the drill string **12** and the wall of the wellbore, called the annulus, as indicated by the direction arrows **9.** In this manner, the drilling fluid lubricates the drill bit **105** and carries formation cuttings up to the surface as it is returned to the pit **27** for recirculation.

The drill string **12** further includes a bottomhole assembly ("BHA"), generally referred to as **100,** near the drill bit **105** (for example, within several drill collar lengths from the drill bit). The BHA **100** includes capabilities for measuring, processing, and storing information, as well as communicating with the surface. The BHA **100** thus may include, among other things, one or more logging-while-drilling ("LWD") modules **120, 120A** and/or one or more measuring-while-drilling ("MWD") modules **130, 130A.** The BHA **100** may also include a roto-steerable system and motor **150.**

The LWD and/or MWD modules **120, 120A, 130, 130A** can be housed in a special type of drill collar, as is known in the art, and can contain one or more types of logging tools for investigating well drilling conditions or formation properties. The logging tools may provide capabilities for measuring, processing, and storing information, as well as for communication with surface equipment.

The BHA **100** may also include a surface/local communications subassembly **110,** which may be configured to enable communication between the tools in the LWD and/or MWD modules **120, 120A, 130, 130A** and processors at the earth's surface. For example, the subassembly may include a telemetry system that includes an acoustic transmitter that generates an acoustic signal in the drilling fluid (a.k.a. "mud pulse") that is representative of measured downhole parameters. The acoustic signal is received at the surface by instrumentation that can convert the acoustic signals into electronic signals. For example, the generated acoustic signal may be received at the surface by transducers. The output of the transducers may be coupled to an uphole receiving system **90,** which demodulates the transmitted signals. The output of the receiving system **90** may be coupled to a computer processor **85** and a recorder **45.** The computer processor **85** may be coupled to a monitor, which employs graphical user interface ("GUI") **92** through which the measured downhole parameters and particular results derived therefrom are graphically or otherwise presented to the user. In some embodiments, the data is acquired real-time and communicated to the back-end portion of the data acquisition and logging system. In some embodiments, the well logging data may be acquired and recorded in the memory in downhole tools for later retrieval.

The LWD and MWD modules **120, 120A, 130, 130A** may also include an apparatus for generating electrical power to the downhole system. Such an electrical generator may include, for example, a mud turbine generator powered by the flow of the drilling fluid, but other power and/or battery systems may be employed additionally or alternatively.

The well-site system is also shown to include an electronics subsystem comprising a controller **60** and a processor **85,** which may optionally be the same processor used for analyzing logging tool data and which together with the controller **60** can serve multiple functions. For example the controller **60** and processor **85** may be used to power and operate the logging tools such as the Dielectric Scanner™ tool mentioned below. The controller and processor need not be on the surface as shown but may be configured in any way known in the art. For example, alternatively, or in addition, as is known in the art, the controller and/or processor may be part of the MWD (or LWD) modules on which, for example, the dielectric tool is positioned, or may be on-board the tool itself.

In the methods and systems according to this disclosure, the electronics subsystem (whether located on the surface or sub-surface on or within the tool or some combination thereof) includes machine-readable instructions for performing one or more of the calculations, analytics and evaluations disclosed herein.

FIG. 2 illustrates a wireline logging system **205** suitable for use with the systems and methods of this disclosure. As shown in FIG. 2, a transmitter **210** receives the acquired well logging data from a sensor included in the wireline tool **230.** The transmitter **210** communicates the acquired well logging data to a surface processer **212** via a logging cable **214.** The logging cable **214** is commonly referred to as a wireline cable. In some embodiments, the processor **212** or a back-end portion (not shown) of the wireline logging system may include a computer system to process the acquired well logging data.

Non-limiting examples of logging tools that may be useful for generating data useful in systems and methods according to embodiments of the present disclosure include the Dielectric Scanner™, which is owned and offered through logging services by Schlumberger, the assignee of the present application, as well as Schlumberger's ARC™ (Array Resistivity Compensated) dielectric tool and Schlumberger's EPT™ (Electromagnetic Propagation) dielectric tool. However, other tools which measure dielectric properties such as resistivity, conductivity and permittivity, may be suitable for use with embodiments within the scope of the disclosure. And any tool that acquires data relating to a formation property at multiple depths of investigation may also be used in the systems and methods according to this disclosure.

The logging tools referred to in the previous paragraph may be used to generate data, such as dielectric data relating to the resistivity, conductivity or permittivity of a formation, which facilitate inferring properties of the rock surrounding a borehole. For example, a Dielectric Scanner™ provides dielectric measurements of conductivity and permittivity at multiple spacings (i.e. different distances between emitters and receiver) and at several frequencies.

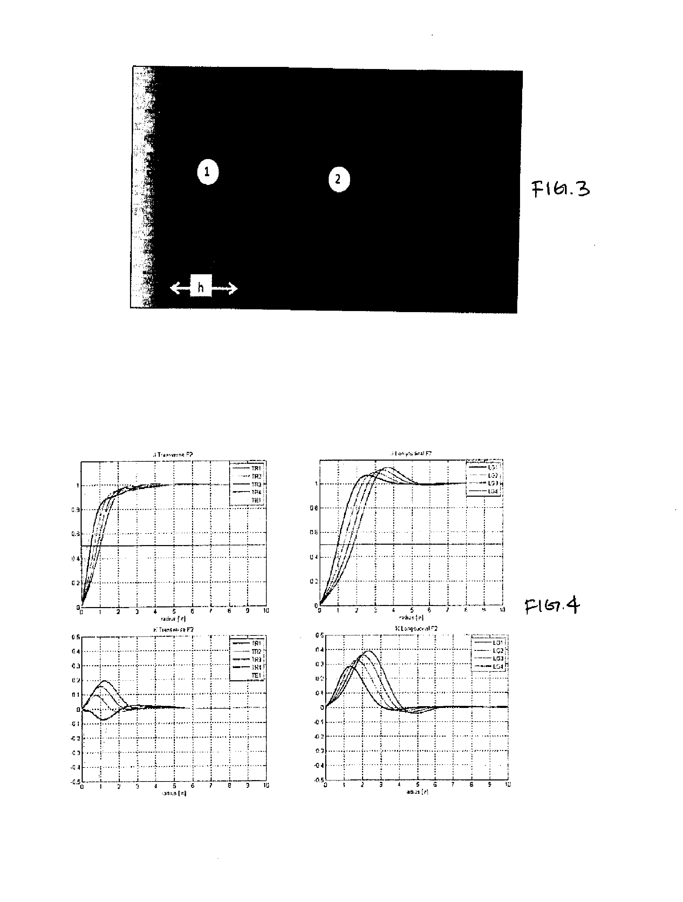

Referring to FIG. 3, a stylized, basic model of a radial inversion profile a formation is illustrated. The model of FIG. 3 includes: a thin, mudcake zone 3, which thickness is generally less than one inch; a shallow, invaded zone 2 containing the rock invaded by the mud filtrate; and a deep, virgin zone 3. Classification and radial inversion are tools used by, for example those in the oil and gas exploration industry, to gain an understanding of the formation and zones being studied.

Classification is used to evaluate the invasion type (for example one or more of the invasion profile radius, conductivity contrast, resistivity contrast, permittivity contrast), not necessarily to quantify the properties of the invasion profile. Classification may result in a predicted understanding of whether the formation is characterized by: a single zone (i.e. is homogenous); a mudcake followed by a single zone; mud invasion, with shallow zone permittivity less important than deep zone permittivity to due change of porosity; shallow invasion with a shallow zone more conductive than a deep zone; deep invasion with a shallow zone more conductive than a deep zone; a shallow invasion with a shallow zone more resistive than a deep zone; a deep invasion with a shallow zone more resistive than a deep zone. In other words, classification may provide a quick look or rough understanding of the environment and may assist users in choosing a radial inversion type.

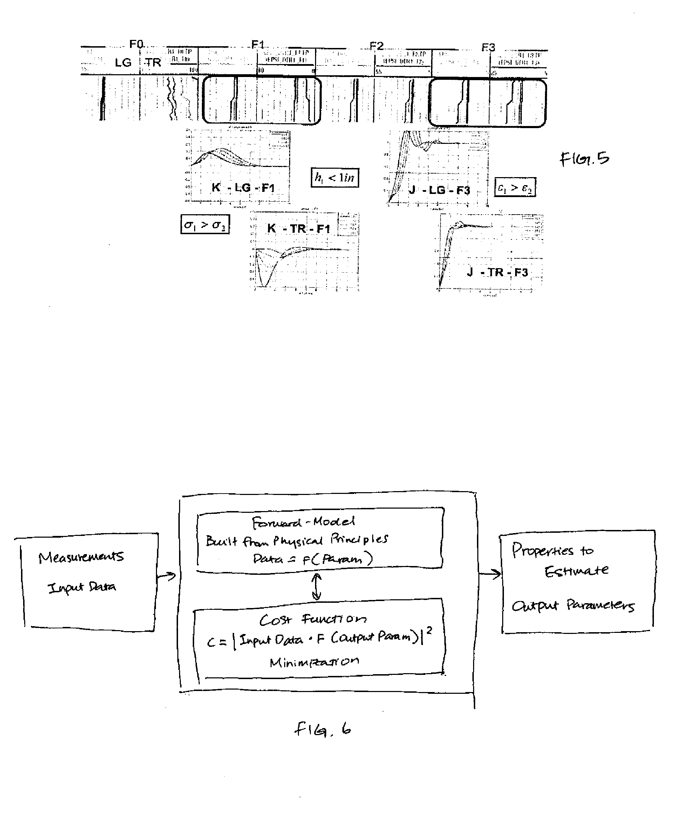

Radial inversion, on the other hand, which is graphically represented in FIG. 6, is used to estimate properties of each zone. Downhole dielectric tools, which may provide data relating to one or more of resistivity, conductivity, permittivity, can provide numerous measurements containing a large wealth of radial information. The inversion procedure attempts to use all these measurements to develop a numerical estimation of parameters characterizing the formation. However, radial processing can face robustness problems. For example, electromagnetic propagation models at high frequency are neither monotonous nor nicely-behaved functions of the formation properties. In addition, the number of parameters to be estimated can be high compared to the number of measurements, and the radial inversion can be further challenging due to the fact that: some measurements are noisy and consequently have high uncertainty; the available measurements do not provide enough information for estimating some properties (insensitivity).

In the case of dielectric tools, permittivity and conductivity may be estimated for each radial zone and each frequency. However, measurements may become less sensitive to deep zone properties when the radius of invasion is high because the tool may have a limited depth of investigation. This problem affects particularly high frequencies, noting that the higher the conductivity, the shallower the depth of investigation. In addition, measurements may become less sensitive to permittivity for low frequency and measurements may become less sensitive to shallow zone properties for low frequency when the invasion radius is low and the frequency is low.

In some embodiments, the disclosure provides workflows using integrated spatial responses to improve interpretation of formation evaluation including one or more of:

- Producing a classification by analyzing measurement patterns;

- Providing a quick look of an invasion profile and/or a probability distribution of invasion radius;

- Stabilizing the radial inversion;

- Generating new logs as weighted sums of the raw measurements to simplify interpretation.

Although the disclosure predominately discusses radial profiling, a person of skill in the art with the benefit of this disclosure can adapt the same workflows to the vertical axis.

### Radial integrated responses I and *K*

An analytic physical model, also referred to as a "forward model," expresses the function relating the radial properties-properties in each radial zone and invasion radius-to tool measurements.

*Approximation of the forward model with radial integrated responses*

In some embodiments, a principle of the methods in accordance with this disclosure is to simplify the forward model using the integrated radial function, *J* and *K,* which are defined according to formulas (1) and (2) below:

$$\varepsilon_{meas} \quad = \quad \varepsilon_2 + J(\rho)(\varepsilon_1 - \varepsilon_2) + K(\rho)\left(\frac{\sigma_1 - \sigma_2}{\omega\varepsilon_0}\right) \qquad (1)$$

$$\sigma_{meas} \quad = \quad \sigma_2 + J(\rho)(\sigma_1 - \sigma_2) - K(\rho)\omega\varepsilon_0(\varepsilon_1 - \varepsilon_2) \qquad (2)$$

wherein $(\varepsilon_1, \sigma_1)$ are the dielectric properties of a first, shallow zone, $(\varepsilon_2, \sigma_2)$ are the dielectric properties of a second, deep zone, $\varepsilon_0$ is the vacuum permittivity, p is the invasion radius and $\omega$ the angular frequency (see FIG. 3).

In some embodiments, wherein resistivity tools are used to acquire data (thereby at low frequency range), only the conductivity is measured. The integrated radial response J can be deduced from the well-known integration of the Doll geometric factor with respect to the vertical axis. The Doll function expresses the additive contribution of each space location to the final magnetic field. The Doll function is explained in "Introduction to Induction Logging and Application to Logging of Wells Drilled With Oil Base Mud," by H.G. Doll, Schlumberger Well Suveying Corp. Journal of Petroleum Technology, Vol. 1, No. 6, Pgs. 148-162, June 1949, which is herein incorporated by reference in its entirety.

In some embodiments, wherein propagation tools are used, the application of Maxwell's equations for laminated media, either vertical, radial or both, does not lead to linear models relating measured complex permittivity to the complex permittivity of each layer. The linear approximation provided by the spatial responses results in a term corresponding to the cross-influence between the conductivities (i.e. imaginary parts) and the permittivity (i.e. the real parts). It is called the *K* function. This cross-influence is expressed by a single function *K* in both cross terms, i.e. conductivity to permittivity and permittivity to conductivity and is explained by the Cauchy-Riemann differential equations characterizing holomorphic functions of complex value. The uniqueness of the J function is also proved by the Cauchy-Riemann theorem, which means that the J-function for conductivity is also the same as the J-function for permittivity.

Accordingly, the function of complex value is defined by:

$$\epsilon^*_{meas} = \epsilon_{meas} + i\frac{\sigma_{meas}}{\omega\epsilon_0} = f_{radial}(\epsilon^*_1, \epsilon^*_2, \rho) = f_{radial}(\epsilon_1 + i\frac{\sigma_1}{\omega\epsilon_0}, \epsilon_2 + i\frac{\sigma_2}{\omega\epsilon_0}, \rho) \quad (3)$$

wherein we consider the partial derivatives with respect to $\varepsilon_1$, $\sigma_1$, $\varepsilon_2$, $\sigma_2$.

In actuality, the functions *J* and *K* depend not only on the invasion radius but also, to a varying degree, on the dielectric properties in both zones. In some embodiments, the systems and methods according to this disclosure are based on the approximation that *J* and *K* only depend weakly on the permittivity and the conductivity contrast. Consequently, the J and K functions can be approximated as follows:

$$J(\rho, \sigma_1, \sigma_2, \epsilon_1, \epsilon_2) \approx J(\rho, \sigma_1) \approx J(\rho, \sigma_{meas}) \quad (4)$$

$$K(\rho, \sigma_1, \sigma_2, \epsilon_1, \epsilon_2) \approx K(\rho, \sigma_1) \approx K(\rho, \sigma_{meas}) \quad (5)$$

One outcome of this approximation is that the *J* and *K* functions of the invasion radius parameter can be tabulated using only 2 dimensions, significantly reducing the complexity of the analysis.

## Application of the *J* and *K* functions for classification

An embodiment of a workflow for applying J and K functions for evaluating classification of a formation, may be based on the following reasoning:

- The different spacing arrays have a specific ordering, according to the frequency, the invasion radius, and the dipole-orientation (polarization) mode;
- Some spacing arrays could be negative due to contribution of the function *K,* which may increase separation of the array measurements depending on the dielectric contrast.

Figs. 4 and 5 provide examples of embodiments of workflow analysis of formation evaluations using the J and K functions and taking into account the above reasoning.

Figure 4 is a graphical representation of the J and K functions calculated from sample downhole single-frequency data acquired at two different orientations (transverse and longitudinal) using a Dielectric Scanner™, offered by Schlumberger. The Dielectric Scanner™ offers continuous measurement of dielectric dispersion (variation of formation dielectric properties as a function of the frequency) at one-inch vertical resolution. The tool uses multi-spacings antenna arrays operating at multiple frequencies in the MHz to GHz range. Moreover, the transmitter and receiver antennas have collocated longitudinal and transverse polarizations.

As shown in FIG. 4, when the J and K functions are ordered according to the depth of investigation, patterns emerge that can be analyzed to evaluate formation classification. Although FIG. 4 provides multiple redundant computations-sixteen calculations total for a single frequency (eight calculations of the J function at four different depths of investigation at each of two different orientations and eight calculations of the K function at four different depths of investigation at each of two different orientations), in some embodiments, only the J or only the K function is analyzed, and for only a single frequency and single orientation (although multiple depths of investigation). In some embodiments, additional orientations and/or additional frequencies are analyzed for the J function. In some embodiments, additional orientations and/or additional frequencies are analyzed for the K function. In some embodiments, both the J function and the K function are analyzed for a single orientation and a single frequency. In some embodiments, the J function, the K function, and/or both are analyzed for more than one orientation, more than one frequency, or both. Generally, additional J and K computations provide redundancy which may improve the certainty of the analysis.

Turning back to FIG. 4, after calculation of the J and K functions for the different depths of investigation, and ordering the J and K functions accordingly, the emergent patterns suggest that the transverse arrays have a shallower depth of investigation than the longitudinal arrays, and that the spacings, from 1 to 4, have deeper and deeper depths of investigation. Also as shown, K functions may have negative values for shallow invasions (e.g. F2, TR) and for a positive contrast, the measurements TR1 and TE1 have very low value compared to the other spacings. Another apparent pattern in this example is that in the longitudinal, the ordering of the spacings is different depending on the invasion radius value. Such reasoning permits classifying the measurement patterns in several invasion type families. In some embodiments, an associated flag algorithm can be further implemented.

FIG. 5 is a graphical representation of another embodiment of a classification analysis. In the embodiment of FIG. 5, the J and K functions are calculated from sample downhole data acquired at two different orientations and each of two different frequencies by a Dielectric Scanner™. In this embodiment, only the K function is calculated for frequency 1, whereas only the J function is calculated for frequency 3. As is apparent from formulas (1) and (2), which define the J and K functions according to this disclosure, the measured permittivity is predominately influenced by K at low frequencies because the angular frequency is low. Accordingly, it is a suitable approximation to ignore the influence of the J function and evaluate permittivity relative to the K function alone. At the same time, it is apparent from the formulas that conductivity is mostly influenced by J.

Following this logic, as shown in FIG. 4, permittivity is evaluated by analyzing the pattern formed from the ordered set of calculated K functions at low frequency (F1). As shown, the ordering of the arrays for frequency F1 provides information about the conductivity contrast sign (positive), as well as the invasion radius range (less than one inch). On the other hand, conductivity is evaluated by analyzing the pattern formed from the ordered set of J functions. This analysis is shown in relation to F3. The ordering of the arrays of frequency F3 provides information about the sign of the permittivity contrast (positive). Additionally, calculating the set of J functions, which comprises a J function calculated for each depth of investigation within the set, at a frequency different from F1 provides redundancy for improving certainty regarding the conclusions from the evaluation of F1, such as the invasion radius range. In other words, in some embodiments, wherein the frequency is low enough with reference to formulas (1) and (2) (such that the K has predominate influence, permitting simplification of formulas (1) and (2)), classification can be analyzed computing only K. In other embodiments, wherein the frequency is high enough with reference to formulas (1) and (2) above, classification can be analyzed using only J. In some embodiments, classification is analyzed computing both K and J. Regardless, analyzing classification at multiple frequencies may provide redundant results increasing the certainty of the analysis.

## Application of the *J* and *K* functions for radial profiling and stabilization of inversion

The problem of estimating the dielectric properties from measurements is a typical inversion problem. Solving inversion problem starts with the definition of a cost function that quantifies the quality of the estimated parameters. For a given set of parameters, this function measures the misfit between the reconstructed measurement-the measurement that we would have with this set of parameters, obtained by applying the forward model to this set of parameters-and the measurement provided by the tool. The next step aims at finding the set of parameters minimizing this cost function. This problem is solved by using a classical iterative procedure (conjugate gradient procedure, Gauss-Newton procedure) and requires the call of numerous forward models. It can be very slow if the physical model is complex and thus compute-intensive.

In the case of noisy measurements, or if the inversion problem could admit multiple solutions, the inversion procedure may provide unstable and poor results. A way to stabilize the solution is to refine the cost function: adding a regularization term in the cost function (*Tikhonov L2* term, *Total Variation L1* term) or adding an a priori term (property values we want the solution to be closed to). The inversion procedure is summarized in the FIG. 5.

### *Probability distribution of radius*

In some embodiments of the invention, as a consequence of the novel definitions of, and assumptions relating to, the J and K functions, for each fixed radius, the formation properties to be estimated belong to linear system, resulting in fast computations (for solving the equations 1 and 2) as compared to performing an inversion with a full model (one which is not simplified with the J and K functions)-in other words, evaluating formation properties becomes a linear solution for each possible radius. The final cost gives us a quality measure of the inversion, which we can further be transformed into a probability.

In some embodiments, this probability study may facilitate:

- Inferring the invasion radius as a maximum probability;
- Detecting multiple possible invasion radius in the case of a multi-modal probability distribution;
- Detecting a homogeneous zone for a near equiprobable probability distribution;
- Detecting a ramp zone in the case of a probability distribution with high standard deviation;

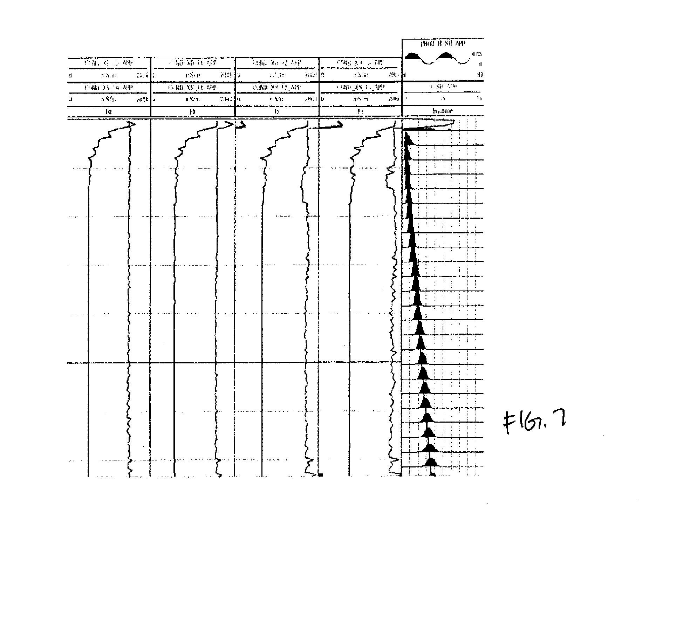

FIG. 7 illustrates a graphical example of a radial quick-look for formation conductivity property. As shown, for each pair of curves, the curve on the left corresponds to shallow conductivities and curve on the right corresponds to deep conductivities. The four first tracks from left to right show the conductivities for four different frequencies, from low frequency to high frequency. The last track in FIG. 7 represents the probability distribution of invasion radius.

The *J* and *K* functions model the response for an environment composed of two radial zones. If the environment contains a shallow zone-mudcake or whole mud invasion-in some embodiments, this method will be sensitive to the radius having the most effect on the measurements, i.e. the invasion radius. However, it is possible to select only the shallowest spacing and apply the method a first time so that it gives a probability of mudcake thickness /whole mud invasion thickness

*Improving the radial inversion*

An optimized initialization may stabilize the inversion procedure. According to embodiments herein, the optimized initialization takes advantage of the probability distribution to adequately guide the inversion without significantly increasing the computation time. In the case of multi-modal distribution, multiple initializations are scanned. The a priori solution points towards these values, so that nearby solutions are preferred.

**Application of the *J* and *K* functions for creating linear combinations of measurments**

Linear combination of measurements of induction tools has been used to focus the information on a specific depth of investigation. However, in the case of propagation measurement, where both permittivity and conductivity play in an interlaced dependency, the interpretation is complex. In some embodiments, *J* and *K* functions can be used for creating appropriate linear combinations from raw measurements that cancel the cross-influence (cancellation of the function *K*).

**Application on the vertical axis**

Although the disclosure has predominately discussed radial applications, the methods and systems directly transpose to the vertical axis. In some embodiments, the objectives of a vertical axis approach is to infer a probability distribution of layer boundaries location, to have a robust estimation of the boundary location, and/or to have a robust estimation of the layer dielectric properties.

**Application to 2D problems**

In the case of a thinly laminated environment, the measurements may be affected by both radial and vertical effects. Classical approximation is to consider that these effects are decoupled so that:

$$\epsilon^*_{meas} = f_{vertical} \, o \, f_{radial}\left(\left(\epsilon^i_1, \sigma^i_1, \epsilon^i_2, \rho^i\right)_{layer\ i}\right) (6)$$

According to some embodiments, the function $f_{radial}$ is approximated with the functions $J^i_{radial}$ and $K^i_{radial}$. The function $f_{vertical}$ is approximated with the functions $J_{vertical}$ and $K_{vertical}$. Thus, the system is still linear and very quick to invert. In some embodiments, a joint radial-vertical inversion can therefore be performed, opens up the possibility, of scanning several invasion radiuses, and/or several boundary locations.

A number of embodiments relating to improving the interpretation of formation evaluation measurements using integrated spatial response have been described. In general, the methods and systems are based on the approximation of the spatial response using a linear combination of formation properties, the coefficients of the linear combination being known as "geometric factors" (i.e. the J and K functions). Nevertheless it will be understood that various modifications may be made without departing from the spirit and scope of the invention. For example, although the examples have primarily been applied to dielectric measurements and Dielectric Scanners™, the methods and systems can be adapted for use with other measurement which are made at multiple depths of investigation and other tools or systems which acquire data from those measurements. For example, the systems and methods may be applied to dielectric (propagation) tools generally, simplifying the physical model with the J and K functions, and may be applied to resistivity tools, simplifying the physical model with the J function.

In any event, interpretation of formation properties could be improved in one or more of the following aspects:

•   Analysis of integrated radial responses may provide a way to perform a classification of invasion types;

•   Combinations of integrated radial response may produce new measurements, as a weighted sum of the raw measurements, which may enable cancellation of the cross-influence between permittivity and conductivity resulting in a more easily interpretable new measurement;

- Integrated radial response may provide a fast quick look of the radial profile in the formation and a probability distribution of the invasion radius;

- Integrated radial response may also help in making decisions on options for possible complex and long processing one or more ways: the analysis of the probability distribution may enable the user to determine the type of invasion and the related recommended radial inversion to be performed; it may provide initialization/a priori points, speeding up the potential radial model inversion process and making the inversion more robust;

- Integrated vertical responses may be used in a similar way to detect boundaries and characterize layer properties.

Accordingly, other embodiments are included as part of the invention and may be encompassed by the attached claims. Furthermore, the foregoing description of various embodiments does not necessarily imply exclusion. For example, "some" embodiments or "other" embodiments may include all or part of "some", "other" and "further" embodiments within the scope of this invention.

## Claims

1. A method of evaluating properties of a formation, comprising:

   a. using a downhole tool in a well to measure a property of a subformation at multiple depths of investigation; and,
   b. calculating one of a spatial integrated function J, a spatial integrated function K, or both for the property at each depth of investigation generating a set of calculated J functions, a set of calculated K functions, or both.

2. A method according to claim 1, wherein the depths of investigation are radial depths of investigation.

3. A method according to claim 1, wherein the depths of investigation are vertical depths of investigation.

4. A method according to claim 1, further comprising: analyzing at least a subset of the set of calculated J functions, analyzing at least a subset of the set of calculated K functions, or both to evaluate classification information relating to at least one of an invasion profile radius, conductivity contrast, and permittivity contrast.

5. A method according to claim 4, wherein the analyzing comprises:

   a. ordering the set of calculated J functions according to depth of investigation, ordering the set of calculated K function according to depth of investigation, or both; and,
   b. analyzing the ordering for the classification information.

6. A method according to claim 1, further comprising calculating a set of estimated formation parameters for a given depth of investigation from the corresponding J function, the corresponding K function or both for each predetermined invasion radius in a set of predetermined invasion radii; and, calculating a cost corresponding to each set of estimated formation parameters generating a set of calculated costs corresponding to the set of predetermined invasion radii.

7. A method according to claim 6, wherein the method further comprises identifying a lowest cost among the set of calculated costs, and performing an initial radial inversion using the predetermined invasion radius associated with the lowest cost.

8. A method according to claim 6, wherein the set of estimated formation parameters comprises a first permittivity associated with a first zone, a first conductivity associated with a first zone, a second permittivity associated with a second zone, and a second conductivity associated with a second zone.

9. A method according to claim 6, further comprising calculating a probability distribution for the set of predetermined invasion radii, a probability for each of one or more predetermined invasion radii, or both.

10. A method according to claim 9, further comprising evaluating the probability distribution to determine at least one of: an estimated invasion radius, existence of multiple possible invasion radii, existence of a homogeneous zone, and existence of a ramp zone.

**11.** A method according to claim 1, wherein the downhole tool measures a formation property chosen from: resistivity, conductivity, a dielectric permittivity, and combinations thereof.

**12.** A method according to claim 11, wherein the downhole tool measures variation of formation dielectric properties as a function of frequency.

**13.** A method according to claim 12, wherein the downhole tool uses multi-spacing antenna arrays operating at multiple frequencies.

**14.** A method according to claim 1, wherein the simplified J function and the simplified K function are defined as follows:

$$\varepsilon_{meas} \;=\; \varepsilon_2 + J(\rho)(\varepsilon_1 - \varepsilon_2) + K(\rho)\left(\frac{\sigma_1 - \sigma_2}{\omega\varepsilon_0}\right) \qquad (1)$$

$$\sigma_{meas} \;=\; \sigma_2 + J(\rho)(\sigma_1 - \sigma_2) - K(\rho)\omega\varepsilon_0(\varepsilon_1 - \varepsilon_2) \qquad (2)$$

wherein $(\varepsilon_1, \sigma_1)$ are the dielectric properties of a first, shallow zone, $(\varepsilon_2, \sigma_2)$ are the dielectric properties of a second, deep zone, $\varepsilon_0$ is the vacuum permittivity, p is the invasion radius and $\omega$ the angular frequency.

**15.** A method according to claim 14, wherein the J function and the K function are approximated by:

$$J(\rho,\sigma_1,\sigma_2,\epsilon_1,\epsilon_2) \approx J(\rho,\sigma_1) \approx J(\rho,\sigma_{meas})$$

$$K(\rho,\sigma_1,\sigma_2,\epsilon_1,\epsilon_2) \approx K(\rho,\sigma_1) \approx K(\rho,\sigma_{meas})$$

**16.** A method according to claim 1, wherein the J and K functions are computed using only two dimensions.

**17.** A system for evaluating formation properties, comprising:

a. a downhole tool for measuring a property of a formation at different depths of investigation; and,
b. a processor for computing a spatial integrated J function, a spatial integrated K function, or both from the measured property at each depth of investigation.

**18.** A system according to claim 17, wherein the processor further performs at least one of:

evaluating classification information, calculating an initial guess from measured data and the spatial integrated J function and spatial integrated J function for a radial inversion, calculating an invasion radius probability distribution, and calculating a probability for each of a predetermined radius of invasion in a set of predetermined radius of inversion.

**19.** A system according to claim 17, wherein the downhole tool measures a dielectric property.

**20.** A system according to claim 19, wherein the downhole tool measures formation dielectric properties over multiple frequencies.

*FIG. 1*

**FIG. 2**

FIG.3

FIG.4

FIG.5

FIG. 6

FIG. 7

Europäisches
Patentamt

European
Patent Office

Office européen
des brevets

**EUROPEAN SEARCH REPORT**

Application Number

EP 12 17 4680

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 509 908 A2 (SCHLUMBERGER LTD [US]; SCHLUMBERGER SERVICES PETROL [FR]; SCHLUMBERGER) 21 October 1992 (1992-10-21) * the whole document * ----- | 1-8,11, 17,18 | INV. G01V3/20 G01V3/30 |
| X | EP 0 289 418 A2 (SCHLUMBERGER LTD [US]; SCHLUMBERGER PROSPECTION [FR]) 2 November 1988 (1988-11-02) * page 2, line 5 - line 10 * * page 4, line 40 - page 6, line 25 * ----- | 1,17 | |
| X | EP 0 084 001 A2 (SCHLUMBERGER LTD [US]; SCHLUMBERGER PROSPECTION [FR]) 20 July 1983 (1983-07-20) * the whole document * ----- | 1,17 | |
| A | EP 2 105 765 A1 (SCHLUMBERGER HOLDINGS [VG]; SCHLUMBERGER SERVICES PETROL [FR]; SCHLUMB) 30 September 2009 (2009-09-30) * abstract * * paragraph [0060] - paragraph [0067]; claim 1 * ----- | 1-20 | |
| A | WO 2011/160201 A1 (UNIV BRITISH COLUMBIA [CA]; HERMANN FELIX [CA]; HABER ELDAD [CA]) 29 December 2011 (2011-12-29) * claim 1 * ----- | 1-20 | TECHNICAL FIELDS SEARCHED (IPC) G01V |
| A | BRICENO M G ET AL: "ssLOPING INVASION PROFILES DERIVED FROM SHALLOW WIRELINE LOGS", PETROPHYSICS, SOCIETY OF PROFESSIONAL WELL LOG ANALYSTS, HOUSTON, TX, US, vol. 46, no. 1, 1 February 2005 (2005-02-01), pages 33-41, XP008080512, ISSN: 1529-9074 * the whole document * ----- | 1-20 | |

The present search report has been drawn up for all claims

| Place of search | Date of completion of the search | Examiner |
|---|---|---|
| The Hague | 1 February 2013 | Lorne, Benoît |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 17 4680

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2013

| Patent document cited in search report | | Publication date | Patent family member(s) | | Publication date |
|---|---|---|---|---|---|
| EP 0509908 | A2 | 21-10-1992 | EP | 0509908 A2 | 21-10-1992 |
| | | | US | 5355088 A | 11-10-1994 |
| EP 0289418 | A2 | 02-11-1988 | BR | 8802004 A | 29-11-1988 |
| | | | DE | 3883592 D1 | 07-10-1993 |
| | | | EP | 0289418 A2 | 02-11-1988 |
| | | | NO | 881571 A | 28-10-1988 |
| | | | OA | 8838 A | 31-03-1989 |
| | | | US | 5157605 A | 20-10-1992 |
| EP 0084001 | A2 | 20-07-1983 | AU | 559470 B2 | 12-03-1987 |
| | | | AU | 9198182 A | 21-07-1983 |
| | | | BR | 8300052 A | 20-09-1983 |
| | | | DE | 3382186 D1 | 11-04-1991 |
| | | | DK | 580582 A | 13-07-1983 |
| | | | EG | 15337 A | 30-10-1993 |
| | | | EP | 0084001 A2 | 20-07-1983 |
| | | | ES | 8405879 A1 | 01-10-1984 |
| | | | GR | 78427 A1 | 27-09-1984 |
| | | | IN | 159632 A1 | 30-05-1987 |
| | | | MX | 152516 A | 14-08-1985 |
| | | | NO | 824063 A | 13-07-1983 |
| | | | OA | 7295 A | 31-08-1984 |
| EP 2105765 | A1 | 30-09-2009 | EP | 2105765 A1 | 30-09-2009 |
| | | | US | 2009248308 A1 | 01-10-2009 |
| WO 2011160201 | A1 | 29-12-2011 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Introduction to Induction Logging and Application to Logging of Wells Drilled With Oil Base Mud. **H.G. DOLL.** Journal of Petroleum Technology. Schlumberger Well Suveying Corp, June 1949, vol. 1, 148-162